(19) Europäisches Patentamt
European Patent Office
Office européen des brevets

(11) **EP 1 876 078 B1**

(12) **EUROPÄISCHE PATENTSCHRIFT**

(45) Veröffentlichungstag und Bekanntmachung des Hinweises auf die Patenterteilung:
**17.12.2014 Patentblatt 2014/51**

(51) Int Cl.:
**B60T 8/36** *(2006.01)*     **B60T 8/50** *(2006.01)*

(21) Anmeldenummer: **07019587.0**

(22) Anmeldetag: **28.07.2004**

(54) **Verfahren zum Ermitteln des Ansteuerstroms eines elektrischen Stellgeräts**

Method of determining a control current in an electric actuator

Méthode à déterminer le courant dans un actionneur électrique

(84) Benannte Vertragsstaaten:
**DE FR**

(30) Priorität: **31.07.2003 DE 10335586**
**26.11.2003 DE 10355836**
**13.05.2004 DE 102004024058**

(43) Veröffentlichungstag der Anmeldung:
**09.01.2008 Patentblatt 2008/02**

(62) Dokumentnummer(n) der früheren Anmeldung(en) nach Art. 76 EPÜ:
**04766348.9 / 1 651 487**

(73) Patentinhaber: **Continental Teves AG & Co. oHG**
**60488 Frankfurt (DE)**

(72) Erfinder:
• **Engelmann, Mario**
**61449 Steinbach/Ts (DE)**
• **Fey, Wolfgang**
**65527 Niedernhausen (DE)**
• **Heinz, Micha**
**64293 Darmstadt (DE)**
• **Jöckel, Wolfgang**
**63179 Obertshausen (DE)**
• **Schmitz, Axel**
**65795 Hattersheim (DE)**

(56) Entgegenhaltungen:
EP-A- 1 069 284     WO-A-01/98124
WO-A-96/28325     DE-A- 10 053 606
DE-A- 10 053 607     DE-A1- 3 807 278
DE-A1- 19 529 433     DE-A1- 19 544 207

**Beschreibung**

Die Erfindung Betrifft ein Hydraulisches Bremsensteuergerät gemäß Oberbegriff des Anspruchs 1 und ein Verfahren zu dessen Ansteuerung.

Dokument DE 195 29 433 A1 zeigt ein Hydraulisches Bremsensteuergerät mit einem elektromagnetisch ansteuerbaren Hydraulikventil.

Ein Hydraulisches Bremsensteuergerät gemäß Oberbegriff des Anspruchs 1 und ein Verfahren zu dessen Ansteuerung sind allgemein bekannt.

Es ist bekannt, in ABS-Steuergeräten für Kraftfahrzeugbremssysteme, aber auch in sogenannten Fahrdynamikreglern mit zusätzlichen Funktionen wie ESP etc., elektromagnetisch ansteuerbare analogisierte Ventile für eine verbesserte Regelung bzw. zur Geräuschminderung einzusetzen.

In neueren Generationen von Hydraulikregelvorrichtungen werden sogenannte analogisierte Schaltventile eingesetzt. Ein analogisiertes Schaltventil ist ein stromangesteuertes Magnetventil, welches an sich zum vollständigen Öffnen oder Schließen ausgelegt ist, jedoch durch gezielte Stromeinstellung so betrieben wird, dass dieses analoge Regeleigenschaften besitzt.

Ein Verfahren zur Erkennung des Schaltpunktes eines analog einsetzbaren Schaltventils, insbesondere zur Bestimmung der Druckverhältnisse aus dem Stromverlauf des Ventilansteuerstromes geht aus der EP 0 813 481 B1 (P 7565) hervor.

Im Prinzip lässt sich demzufolge der Druckgradient oder Durchfluss G eines entsprechenden analogisierten Schaltventils in Abhängigkeit vom Differenzdruck durch Variation des Stroms durch die Magnetspule des Ventils einstellen. Der Volumenstrom Q ist im Bereich der Regelung allerdings schwierig einzustellen und hängt unter anderem vom Differenzdruck $\Delta p$ und vom Strom I durch die Magnetspule des Ventils ab. Allerdings lässt sich diese Abhängigkeit nicht ohne weiteres in einem einmal festgelegten Kennfeld ablegen, da bereits geringe fertigungsbedingte Toleranzen der Ventilbauteile einen großen Einfluss auf den funktionalen Zusammenhang zwischen Durchfluss und Ansteuerstrom haben. Daher ist es erforderlich, während der Fertigung der Ventile für jedes Ventil individuell ein Kennfeld zu bestimmen und dieses in einem Speicher der Elektronik des Steuergeräts abzulegen. Zur Erstellung der individuellen Kennfelder ist jedoch ein aufwändiges Messverfahren mit definierten Druckbeaufschlagungen der Steuergeräte beim Zulieferer oder am Bandende beim Kraftfahrzeughersteller nötig. Die durch das aufwändige Messverfahren ermittelten Kennfelder können dann, wie dies beispielsweise in der WO 01/98124 A1 (P 9896) beschrieben ist, zur Einstellung des gewünschten Druckgradienten herangezogen werden.

Die unveröffentlichte DE 103 21 783.5 (P 10697) beschreibt ein Lernverfahren für Ventilkennlinien von Analogventilen bzw. analogisierten Schaltventilen. Nach diesem Verfahren wird eine Kalibrierung der Hydraulikventile während des Betriebs der ABS-Bremsvorrichtung vorgenommen, in dem eine Ansteuerkennlinie oder entsprechende Korrekturgrößen zur Korrektur einer vorhandenen Ansteuerkennlinie durch ein Lernverfahren ermittelt werden. Für dieses Lernverfahren ist charakteristisch, dass sich dieses über mehrere Zyklen der Blockierschutzregelung hinweg erstreckt. In jedem geeigneten Zyklus werden die benötigten Druckaufbauzeiten gesammelt und es wird mit Hilfe der aus dem aktuellen Zyklus ermittelten Parameter nach einer rekursiven Formel eine Erhöhung der Kennlinie bewirkt. Dieses Verfahren dient zur Verbesserung einer vorhandenen Ansteuerkennlinie und setzt daher eine bereits vorhandene Kennlinie voraus.

Die vorstehend beschriebenen Verfahren zum Ermitteln der Kennfelder oder Kennlinien sind somit entweder nicht genaugenug oder sie können nur durch ein aufwändiges Messverfahren ermittelt werden, welches beim Lieferant oder am Bandende durchgeführt werden muss. Nur auf diese Weise können die den Druckverlauf beeinflussenden, fertigungsabhängigen individuellen Kenngrößen $KG_{ind}$ eines Ventils, die sich z.B. aus den gemessenen Kennfeldern oder Kennlinien gewinnen lassen, ermitteln.

Laut Kennzeichen des Anspruchs 1 sind Messelementen, beispielsweise Messspulen, vorgesehen.

Die Messspule kann elektrisch unabhängig von der Ansteuerspule sein. Es ist aber nach einer bevorzugten Ausführungsform möglich, die Messspule elektrisch in Reihe mit der Ansteuerspule zu schalten. Hierdurch ergibt sich der Vorteil, dass lediglich drei Ansteuerleitungen nach außen geführt werden müssen.

Die Erfindung betrifft darüber hinaus zusätzlich ein Verfahren zum Einregeln der Öffnungsstellung und/oder des Durchflusses eines Hydraulikventils gemäß Anspruch 2.

Weitere bevorzugte Ausführungsformen ergeben sich aus den Unteransprüchen und der nachfolgenden Beschreibung von Ausführungsbeispielen an Hand von Figuren.

Beispiele die nicht im Schutzumfang der Ansprüche einbegriffen sind, sind als Hintergrundinformation zu betrachten.

Es zeigen

Fig. 1    eine schematische Darstellung eines Regelkreises zum Regeln des Magnetflusses ohne zusätzliche Messspule,

Fig. 2    ein Ausführungsbeispiel einer magnetischen Flussregelung mit Messspule,

Fig. 3    ein stromlos offenes Analog/Digitalventil (SO-AD-Ventil) im Querschnitt,

Fig. 4    eine Ausführung mit Messspule ähnlich Fig. 2 mit dem Unterschied, dass als Regelgröße der magnetische Widerstand verwendet wird,

Fig. 5    ein Beispiel zur Bestimmung des magnetischen Widerstands bei geschlossenem Ventil,

Fig. 6    ein Beispiel für ein Verfahren zur Bestimmung des magnetischen Widerstands in einem EBS-Steuergerät,

Fig. 7    ein Beispiel für ein Verfahren zur Bestimmung der Federkraft eines Magnetventils,

Fig. 8    eine schematische Darstellung eines Verfahrens zur Bestimmung einer Ventilöffnungsstromkennlinie,

Fig. 9    eine Anordnung eines Regelkreises zur Ventilkalibrierung mit einem Rechteckformer.

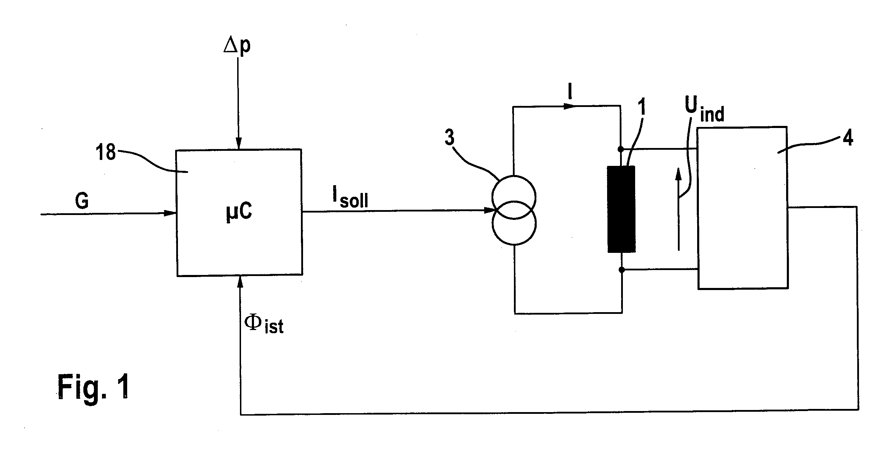

Die nachfolgend beschriebenen Beispiele werden in einer elektrohydraulischen Regelvorrichtung für Personenkraftfahrzeugbremsen angewendet. Üblicherweise umfassen entsprechende Regelvorrichtungen (EBS-Steuergerät) ein Reglergehäuse (ECU) mit einem Mikrocontrollersystem 18, wie in Figuren 1, 2 und 4 schematisch dargestellt, und einen mit dem Regler verbundenen Ventilblock (HCU) mit den zur Steuerung des Hydraulikflusses eingesetzten elektromagnetisch betriebenen Ventilen 1. Der Regler umfasst außerdem eine Ansteuerschaltung (Stromquelle 3), mit der der Ventilstrom I individuell für jedes Ventil pulsweitenmoduliert eingestellt und auch gemessen werden kann. Im hier nicht näher dargestellten Kraftfahrzeugsteuergerät sind für jedes Ventil entsprechende Ventiltreiber vorgesehen, die mittels individuell ansteuerbarer PWM-Treiberstufen realisiert sind. An den Klemmen der Spule ist eine Messeinrichtung 4 vorgesehen, mit der die Induktionsspannung $U_{ind}$ gemessen werden kann. Am Ausgang von Messeinrichtung 4 steht ein Signal $\Phi_{ist}$ zur Verfügung, welches proportional zum Integral über $U_{ind}(t)$ ist.

Für die weitere Erläuterung der Erfindung erscheint es sinnvoll, die folgenden mathematischen Zusammenhänge anzugeben:

Die magnetische Kraft ergibt sich aus

$$F_{magn} = \frac{1}{2 * \mu_0 * A_{Anker}} * \Phi^2 \, ,$$

wobei $\mu_0$ die Permeabilitätskonstante (Luft), $A_{Anker}$ die Ankerfläche und $\Phi$ der magnetische Fluss ist.

Der magnetischer Fluss errechnet sich nach der Formel

$$\Phi = \frac{\Theta}{RM_{gesamt}} \quad . \qquad \text{mit} \quad \Theta = I * N \, ,$$

wobei I der Spulenstrom, N die Windungszahl der Ventilspule und $RM_{gesamt}$ der gesamte magnetische Widerstand des Magnetkreises im Ventil ist.

Weiterhin gilt:

$$U_{ind} = -N * \frac{d\Phi}{dt} \qquad \text{sowie} \qquad \Phi = -\frac{1}{N} \int_0^t U_{ind} \, dt \, .$$

Beim Abschalten des Ventilstroms I in Fig. 1 ergibt sich eine Änderung des magnetischen Flusses $\Phi$ in Ventil

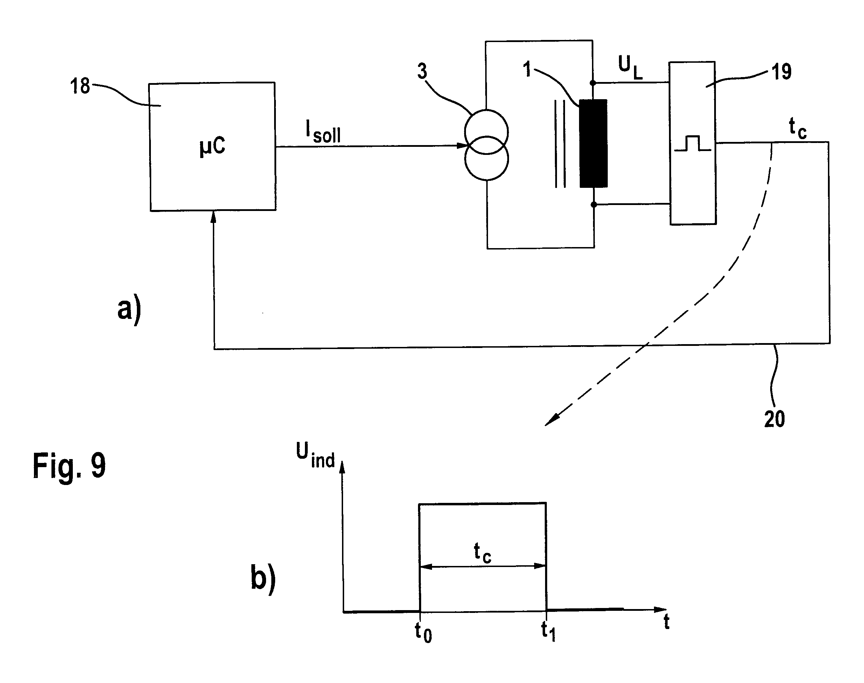

1, welche durch die mit Ventil 1 verbundene Messeinrichtung 4 über Induktionsspannung $U_{ind}$ gemessen werden kann. Messeinrichtung 4 bildet das zeitliche Integral über den Verlauf der induzierten Spannung $U_{ind}$ und führt das integrierte Signal dem Mikrocontroller 18 zu. Dieses Signal ist proportional zum durch die Ventilspule hervorgerufenen magnetischen Fluss Φ. Eine alternative Messeinrichtung zur Bestimmung dieses Integrals ist weiter unten im Zusammenhang mit Fig. 9 beschrieben.

Durch die Rückführung des Signals der Messeinrichtung in den Mikrocontroller lässt sich demzufolge eine Flusssteuerung oder Flussregelung realisieren. Der durch Ventilspule 1 strömende Ventilstrom bildet darin die eigentliche Stellgröße der Regelung.

Durch die Steuerung bzw. Regelung des magnetischen Flusses werden die vorhandenen individuellen Fertigungstoleranzen (Federkonstante und Luftspalte im Magnetkreis) des Ventils ausgeglichen. Der einzustellende Druckgradient G wird durch die ABS/ESP-Regelung innerhalb der Recheneinheit µC (EBS-Steuergerät) vorgegeben. Der Differenzdruck ist der Recheneinheit bekannt. Je nach Ausstattung des Bremsenregelvorrichtung wird dieser vollständig sensorisch oder teilweise über ein Druckmodell auf an sich bekannte Weise bestimmt. Die Federkraft, der maximale Stößelhub und die Abhängigkeit des magnetischen Flusses vom Ventilstrom werden entsprechend der weiter unten beschriebenen Messroutine einmal oder zu verschiedenen Zeitpunkten ermittelt (Rekalibrierung). Damit sind alle einwirkenden Kräfte und die berechnete Kraft/Weg-Funktion des Ventilstößels bekannt; es lässt sich der für den geforderten Druckgradienten erforderliche Ventilstrom berechnen.

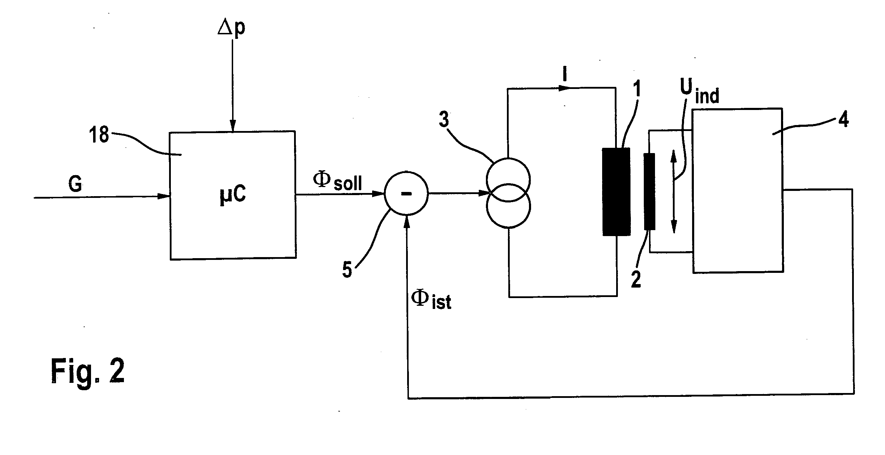

Fig. 2 stellt eine weitere Möglichkeit zur Realisierung der Erfindung mit einem zusätzlichen Spulenregelkreis dar. Der geforderte Druckgradient G liegt ebenfalls in Recheneinheit (µC) vor. Der Differenzdruck ist der Recheneinheit bekannt. Die Federkraft und der maximale Stößelhub werden über die weiter unten beschriebenen Messroutine ermittelt. Der magnetische Fluss wird mit einer Messspule 2 erfasst. Die Messspule ist so angeordnet, dass sie den wirksamen magnetischen Fluss durch Joch und Anker erfasst. Beim Einschalten und Abschalten der Ventilspule wird in der Messspule eine Spannung $U_{ind}$ induziert, deren Integral proportional zum vorhandenen magnetische Fluss ist. Das Signal $Φ_{ist}$, welches sich aus dem durch Stufe 4 erzeugten Integralwert ableitet, wird in Differenzierstufe 5 mit dem Signal $Φ_{soll}$ zusammengeführt und bildet die Sollgröße für den Ventiltreiber 3.

Wie bereits erwähnt, lässt sich die Messroutine zum Ermitteln der ventilspezifischen Kenngrößen jederzeit, auch während des Fahrzeugbetriebs, wiederholen (Rekalibrierung), zum Beispiel um betriebsbedingte Veränderungen bzw. Verschleiß der mechanischen oder auch der elektrischen Bauteile auszugleichen. Die elektronische Ansteuerung erhöht über Treiber 3 den Spulenstrom so lange, bis der magnetische Fluss im Magnetkreis dem errechneten Fluss entspricht. Es handelt sich also bei dem in Fig. 2 dargestellten Beispiel um eine Stößelkraftregelung, bei der die Stößelstellung von den Druckverhältnissen am Ventil abhängt.

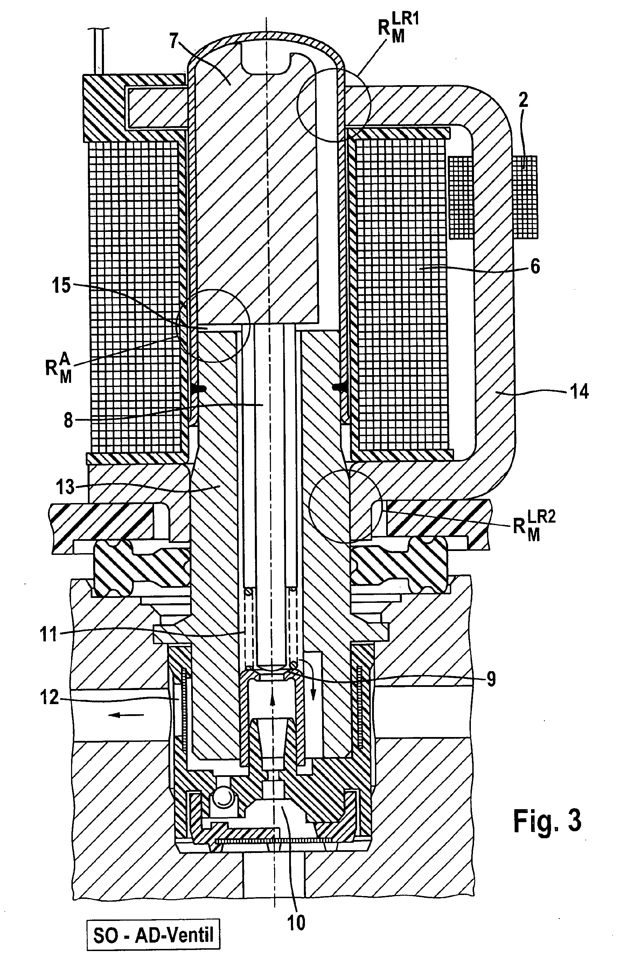

Fig. 3 zeigt den Aufbau eines erfindungsgemäß einsetzbaren Magnetventils in einem ABS/ESP-Ventilblock. Das Ventil gemäß den erfindungsgemäßen Beispielen ist ein stromlos offenes Ventil, welches auf an sich bekannte Weise mittels eines PWM-geregelten Stroms geregelt betrieben wird. Entsprechende Ventile sind unter der Bezeichnung analogisierte Digitalventile "AD-Ventil" bekannt. Nachfolgend wird der Aufbau eines solchen SO-AD-Ventils, insbesondere die die Feldlinien führenden Komponenten des magnetischen Kreises näher beschrieben. Die bestromte Ventilspule 6 dient zur Bewegung des in Ventilgehäuse 13 achsial geführten Ankers 7, welcher über Stößel 8 abdichtend in den Ventilsitz 9 eingreift. Über Ventileinlass 10 strömt Hydraulikflüssigkeit zum Ventilsitz 9 und entweicht über Auslass 12. Feder 11 drückt Stößel und Anker in die Geöffnetstellung, sofern kein Strom durch Spule 6 fließt. Bei bestromter Spule 6 durchdringen die magnetischen Feldlinien Joch 14 und dringen in Gehäuse 13 ein. Die Übergangsstelle zwischen Joch 14 und Gehäuse 13 bildet den magnetischen Widerstand $RM^{LR2}$. Im weiteren Verlauf durchdringen die Feldlinien Luftspalt 15 zwischen Anker 7 und Gehäuse 13, wobei der an diesem Ort vorhandene magnetische Widerstand mit $RM^A$ bezeichnet ist. Zwischen Anker 7 und Joch 14 ergibt sich ein weiterer Luftspalt, welchem der magnetischen Widerstand $RM^{LR1}$ zugeordnet ist.

Der magnetische Widerstand des Magnetkreises wird also im wesentlichen durch die Summe $RM_{ges} = RM^{LR2} + RM^A + RM^{LR1}$ bestimmt. Hier sieht man bereits, dass der magnetische Widerstand im wesentlichen von der Größe der fertigungsabhängigen Luftspalte und von der Stößelstellung abhängig ist. Es ist also möglich, sich den magnetischen Widerstand als Summe aus dem gemessenen magnetischen Widerstand im geschlossenen Zustand $RM_{Ventil}$ geschlossen und dem magnetischen Widerstand des Luftspaltes $RM_{Luft}$ vorzustellen:

$$RM_{gesamt} = RM_{Ventil} + RM_{Luft}.$$

Die Größe $RM_{Ventil}$ kann im geschlossenen Zustand gemessen werden und die Größe $RM_{Luft}$ ergibt sich aus

der Formel $RM_{Luft} = \dfrac{l}{\mu_0 * A_{Anker}}$ , wobei $A_{Anker}$ die für die Ventilbaureihe spezifische magnetisch wirksame Fläche des Ankers 7 (baureihenspezifische Kenngröße $KG_{all}$) und 1 der Stößelhub ist. Das eigentliche Messverfahren ermittelt den Wert für $RM_{Luft}$ nicht direkt, sondern über eine Messung des magnetischen Widerstands bei vollständig geöffnetem Ventil und Subtraktion des magnetischen Widerstands des geschlossenen Ventils. Auf diese Weise lässt sich auch der Stößelhub 1 bestimmen.

In Fig. 3 ist außerdem die zur Durchführung des in Fig. 2 beschriebenen Ausführungsbeispiels notwendige Messspule 2 dargestellt, welche im Bereich des Jochs 14 positioniert ist.

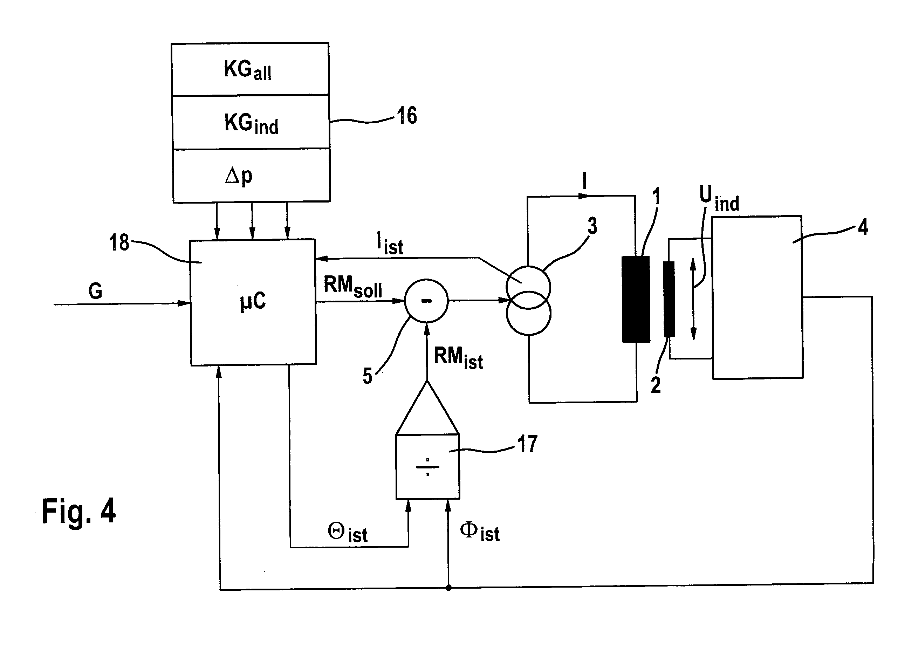

Fig. 4 stellt schematisch eine weiteres Beispiel für einen Regelkreis dar, bei dem die Stößelposition 1 direkt eingeregelt wird. Wie bereits gesagt, setzt sich der magnetische Widerstand $RM_{gesamt}$ aus dem magnetischen Widerstand des geschlossenen Ventils und dem magnetischen Widerstand des Luftspalts zusammen. Der magnetische Widerstand des geschlossenen Ventils lässt sich durch eine einmalige Messroutine bestimmen. $RM_{gesamt}$ ist der Quotient aus $\Theta$ (= I * N) und dem magnetischen Fluss $\Phi$. Die Größe $RM_{Luft}$ ergibt sich aus dem Stößelhub dividiert durch $\mu_0 * A$ ($\mu_0$ = Permeabilitätskonstante, A = Querschnittsfläche). Es gilt weiterhin: $RM_{ist}^{gesamt} = \dfrac{\Theta_{ist}}{\Phi_{ist}}$ . Diese Größe wird durch Dividierer 17 berechnet. Der Ausgang von Dividierer 17 ist mit Differenzierglied 5 verbunden. Die Größe $\Phi_{ist}$ wird bestimmt über den an der Messspule ermittelten und mittels Integrationsstufe 4 zeitlich integrierten Spannungsverlauf. Diese Größe ist proportional zum Differenzdruck. Da $RM_{gesamt}$ proportional zum Stößelhub ist, führt die dargestellte Regelung von $RM_{gesamt}$ zu einer direkten Regelung des Stößelhubs 1. Dabei setzt die Recheneinheit $\mu C$ den geforderten Druckgradienten in einen bestimmten Strömungsquerschnitt bzw. Stößelhub um und damit in einen magnetischen Soll-widerstand $RM_{soll}$. Grundlage für die Berechnung sind an sich bekannte hydrodynamische Kennwerte $KG_{all}$, welche für die ganze Ventilbaureihe gültig sind und deshalb in der Recheneinheit $\mu C$ fest gespeichert werden können, sowie ventilspezifische Kenngrößen $KG_{ind}$, die individuell durch das hier ebenfalls beschriebene Verfahren ermittelt werden. Diese ventilspezifischen Kenngrößen sind beispielsweise der magnetische Gesamtwiderstand des geschlossenen Ventils und die Federkraft (siehe Block 16). Für die Regelung wird außerdem, wie bereits weiter oben beschrieben, der aktuelle Differenzdruck benötigt. Gleichzeitig wird der aktuelle Ventilstrom bestimmt und mit der Windungszahl der Erregerspule multipliziert. Das Produkt ist die Durchflutung $\Theta$ (magnetische Spannung). Die aktuelle magnetische Spannung wird durch den aktuellen magnetischen Fluss dividiert. Das Ergebnis ist der aktuelle magnetische Widerstand. Zur Regelung wird ein Soll/Istwert-Vergleich durchgeführt und daraus die Stellgröße I (Spulenstrom) generiert.

Das Verfahren gemäß dem Beispiel in Fig. 4 bietet darüber hinaus die Möglichkeit, ohne zusätzliche Drucksensoren in den einzelnen Drucksensoren den Druck in den an das Ventil angeschlossenen Fluid-Leitungen zu bestimmen. Bei konstanter Stößelposition, welche durch einen Regler konstant gehalten werden muss, kann aus der aktuell bei dieser Stößelposition gemessenen Stößelkraft in Verbindung mit den bekannten allgemeinen Kenngrößen $KG_{all}$ des Ventils der Druck analog dem oben beschriebenen Verfahren berechnet werden.

In einem Kraftfahrzeugbremssystem wird der Eingangsdruck z.B. durch die Bremspedalbetätigung bestimmt. Bekanntlich weicht zum Beispiel während eines ABS-Regelvorgangs der Eingangsdruck vom Druck in den einzelnen, zu den Bremszylindern führenden Hydraulikleitungen ab. Da im Prinzip nach dem vorhergehenden Messverfahren lediglich der am Ventil herrschende Differenzdruck bestimmbar ist, kann es erforderlich sein, den Vordruck sensorisch zu bestimmen (z.B. Drucksensor am Tandemhauptzylinder). Der Vordruck kann jedoch auch rechnerisch über Modellbetrachtungen bestimmt werden. Des weiteren ist es möglich, durch Betrachtung bestimmter Betriebszustände des Bremssystems den Druck auch ohne genaue Kenntnis des Vordrucks zu bestimmten. Auf diese Weise ist eine vollkommen drucksensorlose Druckbestimmung realisierbar. Hierdurch werden in einem ABS/ESP-Bremsensteuergerät erhebliche Kosten für zusätzliche Drucksensoren eingespart.

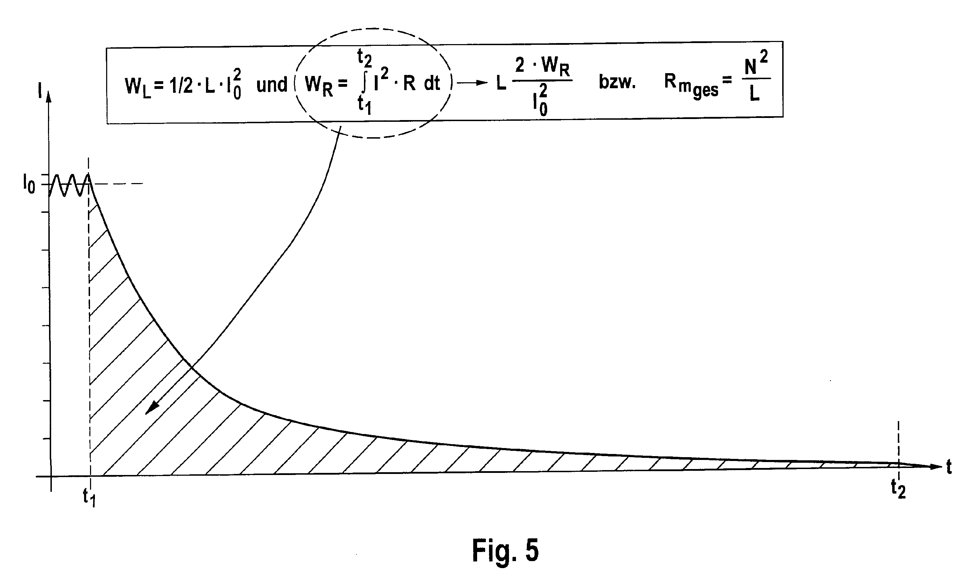

Das Diagramm in Fig. 5 zeigt den Stromverlauf in einer Ventilspule nach dem Abschalten des Stroms bei einem geschlossenen Ventil. Aus dem Integral unter der Stromkurve lässt sich der magnetische Widerstand $RM_{ges}$ bei bekannter Spulenwindungszahl N ermitteln. Der physikalische Zusammenhang ergibt sich aus den im Kasten von Fig. 5 angegebenen Formeln, wobei $W_L$ die magnetische Energie des magnetischen Kreises und R der ohmsche Widerstand des elektrischen Spulenkreises ist.

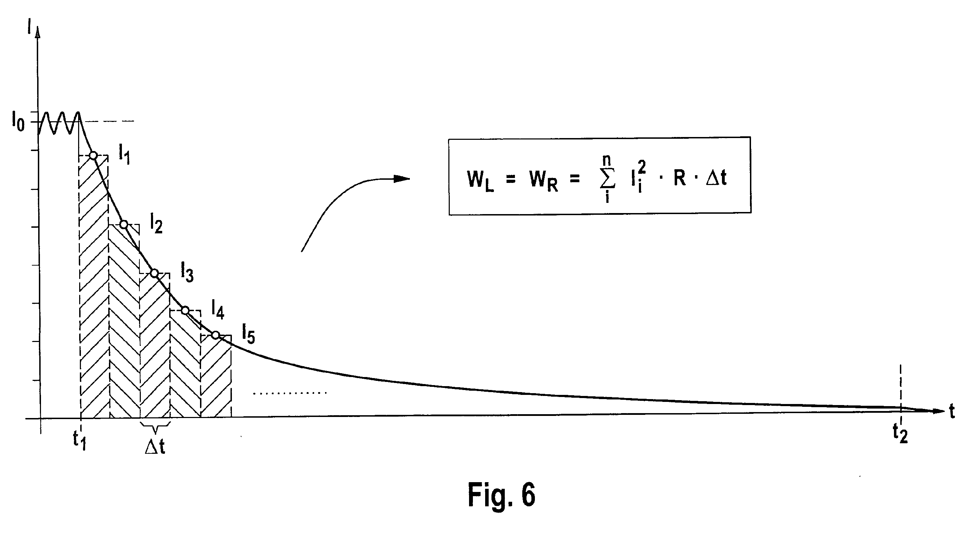

Ein Beispiel zur Durchführung eines Messverfahrens zur Bestimmung des magnetischen Widerstands entsprechend dem Prinzip in Fig. 5 ist in Fig. 6 skizziert. In einem ersten Schritt wird ein Stromwert $I_0$ durch das EBS-Steuergerät (geregelt) eingestellt, bei dem das Ventil sicher geschlossen ist. Danach wird der duty-cycle der PWM-Regelung so eingestellt, dass kein Strom mehr in die Spulentreiber eingespeist wird. Der durch die Induktivität gespeicherte Strom klingt über die Rezirkulationsmöglichkeit der Endstufe ab. Anschließend erfolgt eine Messung des Stromverlaufs zu vorgegebenen Zeitpunkten in gleichem Abstand ($I_1$, $I_2$, $I_3$,...) im Zeitraum von $t_1$ bis $t_2$. Die gemessenen Stromwerte werden durch die im Steuergerät durchgeführte Software gespeichert. Die im Kasten von Fig. 6 angegebene Formel zeigt eine Möglichkeit zur Bildung des Integrals $W_L$ über eine Summe.

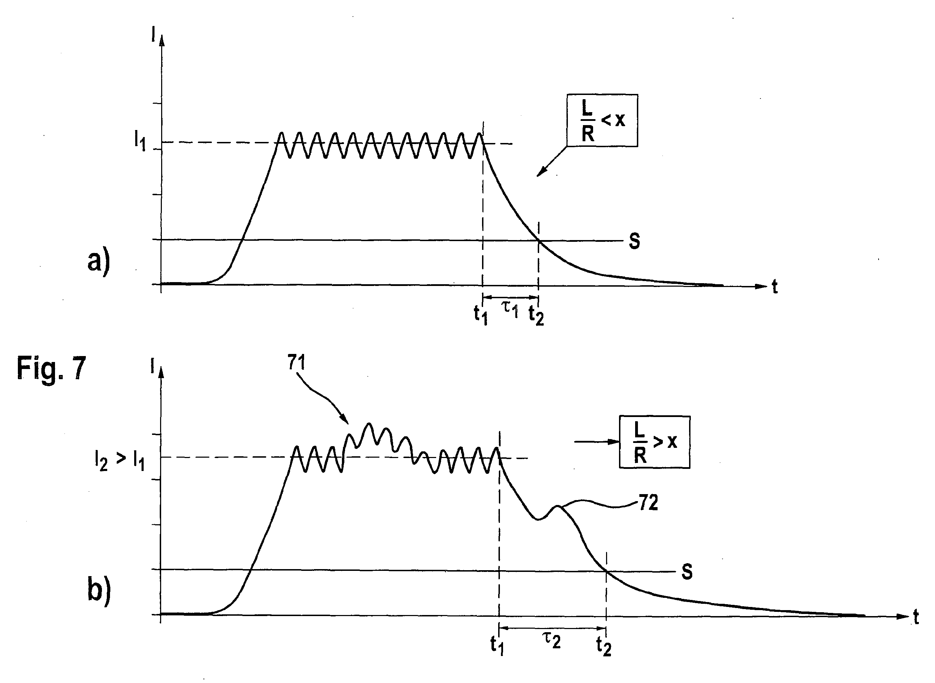

Gemäß dem in Fig. 7 skizzierten Verfahren wird zunächst sukzessive, von einem geeignet kleinen Strom von zum Beispiel $I \approx 0$ beginnend, der Strom schrittweise erhöht. In Teilbild a) wird der Strom zunächst auf einem Wert $I_1$ gehalten, bei dem das Ventil gerade noch geöffnet ist, d.h. bei einem höheren Strom würde das Ventil schließen. Zum Zeitpunkt $t_1$ wird der Strom abgeschaltet und die Zeit $\tau_1$ gemessen, bis der aktuelle Stromwert unterhalb eines Schwellenwertes S (Zeitpunkt $t_2$) gefallen ist. Aufgrund der Geöffnetstellung des Ventils ergibt sich eine niedrige Induktivität und damit eine kurze Zeitkonstante $\tau_1$ beim exponentiellen Stromabklingverhalten.

In Teilbild b) ist der Stromverlauf gezeigt, wenn das entsprechende Ventil mit einem Strom $I_2$ angesteuert wird, welcher ein Schließen des Ventils bewirkt. Der Schließvorgang ist an einer kurzzeitigen Erhebung 71 des Stromes im Konstantstrombereich erkennbar. Zum Zeitpunkt $t_1$ wird der Strom wie oben abgeschaltet, der Strom klingt abermals bis unterhalb der Schwelle S ab. Im Gegensatz zum offenen Ventil ist jedoch die Zeitkonstante $\tau_2$ des zunächst geschlossenen Ventils auf Grund des niedrigeren magnetischen Widerstands (höhere Induktivität) in Teilbild b) höher, als die entsprechende Zeitkonstante in Teilbild a). Zudem bewirkt das Öffnen des Ventils, welches ebenfalls an einer Erhebung 72 im Stromverlauf erkennbar ist, ebenfalls eine Verlängerung der Zeitkonstante.

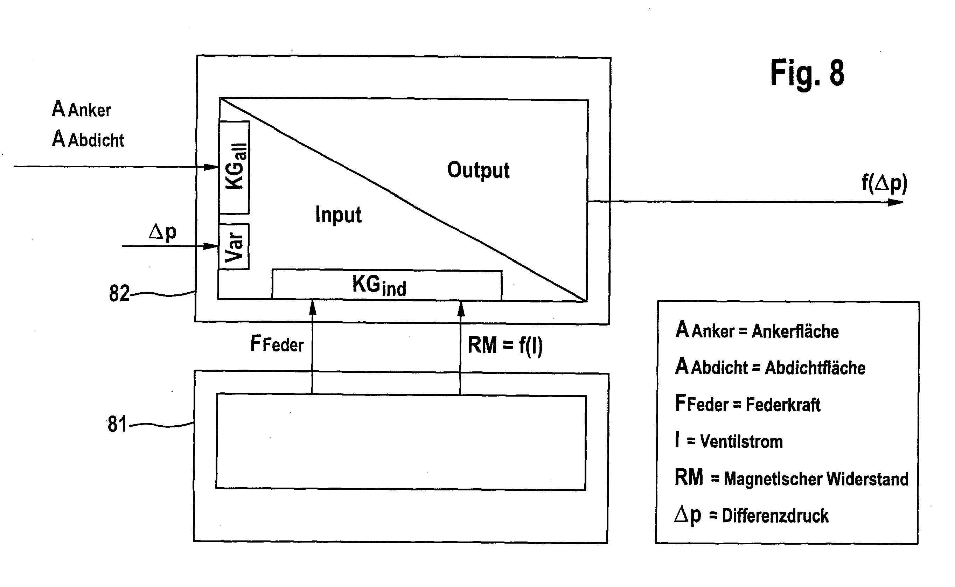

In Fig. 8 ist schematisch ein Beispiel für einen Algorithmus 82 zur Berechnung der Ventilöffnungsstromkennlinie mittels den nach den Beispielen in den Figuren 5 bis 7 ermittelten ventilspezifischen individuellen Kenngrößen $KG_{ind}$ (Messverfahren 81) in einer elektrohydraulischen Steuervorrichtung 82 dargestellt. Bei den ventilspezifischen individuellen Kenngrößen $KG_{ind}$ kann es sich ganz allgemein um Kennlinien oder Parameter des Ventils handeln. In einem elektronischen Bremsensteuergerät mit ABS-Funktion und ggf. weiteren Funktionen, wie ASR, ESP etc., wird für eine Ventilregelung mit hoher Genauigkeit eine Kurve benötigt, welche den zum Öffnen des Ventils notwendigen Strom bei einem vorgegebenen Differenzdruck $\Delta P$ angibt (differenzdruckabhängige Ventilöffnungsstromkennlinie $f(\Delta P)$). Für Algorithmus 82 werden eingangsseitig im Regler gespeicherte allgemeingültige Kenngrößen $KG_{all}$, welche für die Ventilserie kennzeichnend sind, vorgegeben. Diese können durch die baureihenspezifische Ankerfläche $A_{Anker}$ und die Ventilabdichtfläche $A_{Abdicht}$ näher bezeichnet werden. Weiterhin wird der aktuelle Differenzdruck $\Delta P$ für das betreffende Ventil am Eingang als variable Größe (Var) vorgegeben, welche entweder sensorisch bestimmt oder durch das EBS-System aus anderen Größen näherungsweise berechnet wird.

Entsprechend Algorithmus 82 wird nach Maßgabe des im Regler festgelegten Abdichtquerschnitts $A_{Abdicht}$ (allgemeingültige Ventilkenngröße $KG_{all}$) zunächst die hydraulische Kraft $F_{Hydraulik}$ über $F_{Hydraulik} = \Delta P * A_{Abdicht}$ berechnet. Mit der vorgegebenen Ankerfläche $A_{Anker}$ und dem magnetischen Widerstand RM lässt sich die stromabhängige magnetische Kraft $F_{magn}(I)$ berechnen. Im Gleichgewichtszustand ist das Ventil gerade noch geschlossen. Die magnetische Kraft $F_{magn}$, die hierzu notwendig ist, ergibt den Haltestrom:

$$F_{Feder} + F_{Hydraulik} = F_{magn}$$

Mit dieser Formel lässt sich demzufolge unter Berücksichtigung der Ventilabdichtfläche und dem Abdichtquerschnitt der differenzdruckabhängige Haltestrom für diskrete Differenzdrücke (kein Volumenstrom im Ventil) relativ genau berechnen.

Für die Anwendung in einem EBS-System ist es außerdem zweckmäßig, zur weiteren Erhöhung der Genauigkeit der ermittelten Halteströme die nachfolgend beschriebenen Korrekturmaßnahmen A) bis C) zusätzlich durchzuführen:

A) Öffnungsstrom/Haltestromkorrektur

Die auf Grundlage der Bilanzgleichung $F_{Feder} + F_{Hydraulik} = F_{magn}$ bei einer bestimmten Druckdifferenz ermittelten sogenannten Halteströme entsprechen noch nicht den für das Öffnen des Ventils tatsächlich notwendigen Öffnungsströmen, da diese durch Strömungseffekte immer etwas niedriger sind, als die berechneten Halteströme. Es hat sich gezeigt, dass die genauere Öffnungsstromkennlinie $I_{öffnung}(\Delta P)$ bevorzugt dadurch ermittelt werden kann, dass in dem benötigten Druckdifferenzbereich der Haltestromkennlinie $I_{Halte}(\Delta P)$ ein konstanter negativer Stromoffset $I_{korr}^{const}$ zuaddiert wird. Der Stromoffset lässt sich durch geeignete Versuche ohne weiteres ermitteln:

$$I_{Öffnung}(\Delta P) = I_{Halte}(\Delta P) - I_{korr}^{const}$$

B) Magnetische Korrektur

Die weiter oben beschriebene Berechnung der Haltestromkennlinie geht von der vereinfachten Annahme aus, dass der magnetische Widerstand bei geschlossenem Ventil nicht vom Strom abhängt. Auf Grund des Einflusses der im magnetischen Kreis des Ventils vorhandenen ferromagnetischen Materialien ist jedoch zur weiteren Erhöhung der Genauigkeit noch ein Korrekturterm sinnvoll, mit dem dieser Einfluss des "Eisenkreises" korrigiert werden kann. Zur Korrektur dieses Einflusses wird insbesondere in erster Näherung eine Geradengleichung für den Widerstandsverlauf des magnetischen Widerstands $RM(I) = m * I + b$ für das geschlossene Ventil angenommen. Diese Kurve lässt sich durch Messung von RM bei verschiedenen Strömen $I_1$, $I_2$, $I_n$ bestimmen, wobei alle $I_n$ größer als der Schließstrom des jeweiligen Ventils sind. Im vorliegenden Beispiel ergibt sich eine Steigung von m im Bereich von $10^6 \dfrac{Vs}{I}$. Durch Einsetzen des beschriebenen Korrekturterms in die Formel zur Berechnung von $F_{magn}$ kann dann eine korrigierte Haltestromkennlinie ermittelt werden, welche von dem Einfluss der ferromagnetischen Materialien weitestgehend bereinigt ist.

C) Thermische Korrektur

Wie aus den im Kasten von Fig. 5 angegebenen Formeln hervorgeht, ist der magnetische Widerstand $RM_{ges}$ proportional zu $1/R_L$, wobei $R_L$ der Spulenwiderstand ist, wenn zur Vereinfachung davon ausgegangen wird, dass der Widerstand des elektrischen Kreises ausschließlich durch den Spulenwiderstand bestimmt ist. Im weiter oben beschriebenen Verfahren wurde bisher immer davon ausgegangen, dass $R_L$ eine baureihenspezifische Kenngröße ist, die nicht berücksichtigt zu werden braucht. Über den Spulenwiderstand wirken sich nun aber Temperaturänderungen der Spule unerwünschterweise auch auf den gemessenen magnetischen Widerstand aus. Ein Korrekturterm, welcher diesen Einfluss beseitigt, führt deshalb zu einem noch weiter verbesserten Berechnungsverfahren. Eine solche thermische Korrektur des gemessenen magnetischen Widerstands kann vorzugsweise dadurch herbeigeführt werden, dass über den duty-cycle der pulsweitenmodulierten Ventilansteuerung der Spulenwiderstand bestimmt wird. Ein hierfür geeignetes Verfahren zur Bestimmung des Spulenwiderstands ist in der WO 03/074338 A1 beschrieben.

Die obigen Ausführungen beziehen sich auf ein Ventil, welches stromlos offen ist. In analoger Weise lässt sich das beschriebene Verfahren auch für Ventile einsetzen, welche stromlos geschlossen sind.

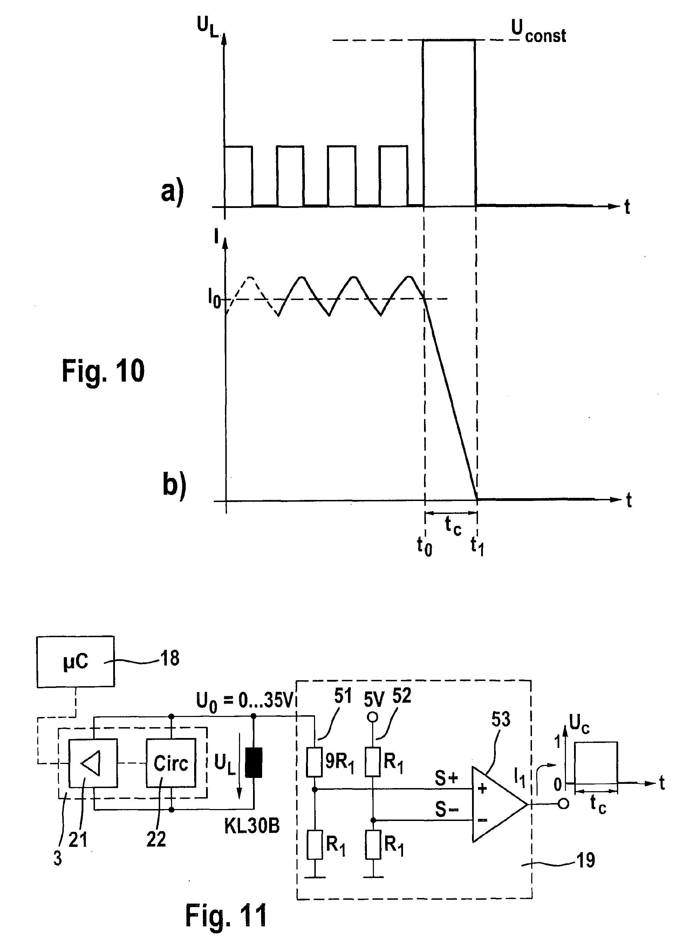

Das in Fig. 9a dargestellte Ausführungsbeispiel bezieht sich auf eine Schaltungsanordnung wie in Fig. 1 beschrieben, mit dem Unterschied, dass zur vereinfachten Messung der Induktionsspannung ein in Fig. 11 dargestellter Rechteckformer 19 vorgesehen ist. Rechteckformer 19 lässt sich ebenfalls vorteilhaft an Stelle der Messeinrichtung 4 in Fig. 2 einsetzen. Wie bereits weiter oben beschrieben wurde, umfasst der EBS-Regler eine Treiberschaltung 3 (Stromquelle), mit der der Ventilstrom I individuell für jedes Ventil pulsweitenmoduliert eingestellt und auch gemessen werden kann. In Verbindung mit Rechteckformer 19 kann die Induktionsspannung $U_{ind}$ auf einfache Weise über eine Zeitmessung, wie in Teilbild b) skizziert, gemessen werden. Der magnetische Fluss in Spule 1 des Stellgeräts induziert beim Abschalten des Stroms zum Zeitpunkt $t_0$ eine Spannung $U_L$ (Klemmspannung), so dass der Strom während des Abschaltens in einer Zeit $t_c$ auf etwa den Wert 0 abfällt. Der Spannungsverlauf von $U_L$ ist in Fig. 10a) näher dargestellt. Der währenddessen durch die PWM-Ventilansteuerung hervorgerufene Stromverlauf geht aus Fig. 10b) hervor.

Die Größen $R_L$ (Widerstand der Spule), $U_L$ (eingeregelte Abkommutierspannung), sowie $I_0$ (Ventilstrom) sind der Recheneinheit 18 bekannt. Die Zeit $t_c$, die proportional zur Induktivität $L$ ist, wird mittels Rechteckformer 19 erfasst. Am Ausgang von Rechteckformer 19 liegt ein elektrisches Signal vor, welches proportional zu $t_c$ ist. Dieses Signal wird über Leitung 20 Recheneinheit 18 als Istgröße für die vorzunehmende Regelung zugeführt.

Aus der elektronischen Schaltungsanordnung in Fig. 11 ergibt sich die Wirkungsweise des Rechteckformers 19. Stromquelle 3 setzt sich zusammen aus einem Stromtreiber 21 und einem Rezirkulationskreis 22, welcher den Rezirkulationsstrom nach dem Abschalten des Stroms zum Zeitpunkt $t_0$ mit einem steuerbaren Widerstand regelt, wobei Rezirkulationskreis 22 von der Recheneinheit 18 angesteuert ist. Ein entsprechender Schaltkreis zum Ansteuern von Hydraulikventilen ist aus der Patentanmeldung DE 102004017239.0 bereits bekannt. Mit Klemme $U_0$ ist ein erster Spannungsteiler 51, bestehend aus Widerständen $R_1$ und $9R_1$ verbunden, welcher die hohen Spannungswerte $U_0$ am Signaleingang S+ des Komparators 53 um etwa den Faktor 10 reduziert. Ein zweiter Spannungsteiler 52 erzeugt am Eingang S- des Komparators 53 eine Referenzspannung, die gleich der halben Logikversorgungsspannung ist. Komparator 53 bewertet somit die Differenz der Signale S+ und S-, wodurch ein geeignetes Rechtecksignal erzeugt wird.

Mittels des Rezirkulationskreises 22 kann der Strom nach dem Abschalten innerhalb relativ kurzer Zeit (weniger als 1 ms) abkommutiert werden, wie in Fig. 10b dargestellt ist. Dabei kann die Klemmspannung $U_L$ auf einen konstanten Wert $U_{const}$ (Fig. 10a) eingestellt werden. Während einer an sich bekannten pulsweitenmodulierten Regelung (PWM) des Ventilstromes steigt die Spannung an $U_0$ auf maximal ca. 18 V, so dass der Eingang S+ niemals größer als 2.5 V wird. Der Ausgang des Komparators bleibt somit auf "logisch 0". Zu Beginn einer Abkommutierung steigt die Spannung $U_0$ jedoch auf beispielsweise 35 V an, wodurch $S+$ mit dann 3.5 V deutlich höher als $S-$ liegt. Die Folge davon ist ein Umschalten des Komparators auf "logisch 1", bis die Spannung $U_0$ entsprechend dem Ende der Abkommutierung wieder auf 0 V abfällt. Danach schaltet auch der Komparator wieder auf "logisch 0" um. Somit entspricht die Dauer der "logischen 1" am Ausgang des Komparators genau der Dauer $t_c$ der Abkommutierung.

Die Induktivität der Spule errechnet sich aus dem Stromverlauf während des Abkommutierens zwischen Zeitpunkt $t_0$ und Zeitpunkt $t_1$ nach der Formel:

$$u_L = L \cdot \frac{di}{dt}$$

Durch die spezielle Ansteuerung, bei der $U_L$ zwischen der Zeit $t_0$ und $t_1$ konstant gehalten wird, wird das zur Bestimmung der Induktivität der Spule zu berechende zeitliche Integral über den Strom besonders einfach. Die Induktivität der Ventilspule kann dann besonders einfach ermittelt werden durch

$$L = \frac{-t_c \cdot R_L}{\ln\left(\dfrac{u_L}{I_0 \cdot R_L + u_L}\right)}.$$

## Patentansprüche

1. Hydraulisches Bremsensteuergerät mit mindestens einem elektromagnetisch ansteuerbaren Hydraulikventil, umfassend eine elektromagnetische Spule (6) und einen durch einen Anker (7) bewegten Stößel (8), wobei der Anker in einem Ventilgehäuse (13) achsial geführt wird und durch den Strom beeinflusst zum Öffnen und/oder Schließen des Hydraulikventils bewegt wird, **dadurch gekennzeichnet, dass** das Hydraulikventil mit einem oder mehreren zusätzlichen Messelementen (2) zur Bestimmung des Magnetflusses versehen ist, wobei bei bestromter Spule (6) die magnetischen Feldlinien ein Joch (14) durchdringen und in das Gehäuse (13) eindringen, wobei die Übergangsstelle zwischen dem Joch (14) und dem Gehäuse (13) den magnetischen Widerstand $RM^{LR2}$ bildet, wobei im weiteren Verlauf die Feldlinien einen Luftspalt (15) zwischen dem Anker (7) und dem Gehäuse (13) durchdringen, wobei der an diesem Ort vorhandene magnetische Widerstand mit $RM^A$ bezeichnet ist, wobei sich zwischen dem Anker (7) und dem Joch (14) ein weiterer Luftspalt ergibt, welchem der magnetischen Widerstand $RM^{LR1}$ zugeordnet ist, wobei der magnetische Widerstand des Magnetkreises also im wesentlichen durch die Summe $RM_{ges} = RM^{LR2} + RM^A + RM^{LR1}$ bestimmt wird, und wobei das Messelement eine Messspule (2) ist, welche im Bereich des Jochs (14) positioniert ist.

2. Verfahren zum Einregeln der Öffnungsstellung und/oder des Durchflusses eines elektrisch ansteuerbaren Hydraulikventils in einem hydraulischen Bremsensteuergerät gemäß Anspruch 1, **dadurch gekennzeichnet, dass** im Bereich des Hydraulikventils mindestens eine Messspule (2) angeordnet ist, und dass das Messsignal der Messspule zum Einregeln des Ansteuerstroms verwendet wird.

3. Verfahren nach Anspruch 3, **dadurch gekennzeichnet, dass** das Messsignal der Messspule (2) eine Spannung ist, welche aufintegriert wird.

4. Verfahren nach Anspruch 4, **dadurch gekennzeichnet, dass** aus der aufintegrierten Spannung der Magnetfluss und daraus die magnetische Kraft und/oder der Stößelhub bestimmt wird.

5. Verfahren nach mindestens einem der Ansprüche 2 bis 4, **dadurch gekennzeichnet, dass** der Ventilöffnungsstrom durch einen Korrekturterm korrigiert wird, welcher den stromabhängigen Einfluss des ferromagnetischen Magnetkreises mitberücksichtigt.

**6.** Verfahren nach mindestens einem der Ansprüche 2 bis 5, **dadurch gekennzeichnet, dass** zunächst der Ventilhaltestrom berechnet wird und daraus mittels eines weiteren Korrekturterms oder eines Offsets der Ventilöffnungsstrom ermittelt wird.

**7.** Verfahren nach mindestens einem der Ansprüche 2 bis 6, **dadurch gekennzeichnet, dass** das Hydraulikventil mittels eines pulsweitenmodulierten Stroms (PWM) angesteuert werden, wobei der Spulenwiderstand über den duty-cycle der PWM-Ansteuerung bestimmt wird, und dass der Spulenwiderstand bei der Berechnung der stellgeräteindividuellen Parameter $KG_{ind}$ mitberücksichtigt wird.

**Claims**

**1.** Hydraulic brake control device having at least one hydraulic valve which can be electromagnetically driven, comprising an electromagnetic coil (6) and a tappet (8) which is moved by an armature (7), wherein the armature is axially guided in a valve housing (13) and is moved in a manner influenced by the current in order to open and/or close the hydraulic valve, **characterized in that** the hydraulic valve is provided with one or more additional measurement elements (2) for determining the magnetic flux, wherein, when current is applied to the coil (6), the magnetic field lines pass through a yoke (14) and into the housing (13), wherein the transition point between the yoke (14) and the housing (13) forms the magnetic resistance $RM^{LR2}$, wherein, in the further course, the field lines pass through an air gap (15) between the armature (7) and the housing (13), wherein the magnetic resistance which is present at this location is designated $RM^A$, wherein a further air gap is produced between the armature (7) and the yoke (14), the magnetic resistance $RM^{LR1}$ being associated with the said further air gap, wherein the magnetic resistance of the magnetic circuit is therefore determined substantially by the sum $RM_{tot} = RM^{LR2} + RM^A + RM^{LR1}$, and wherein the measurement element is a measurement coil (2) which is positioned in the region of the yoke (14).

**2.** Method for adjusting the opening position and/or the flow through a hydraulic valve, which can be electrically driven, in a hydraulic brake control device according to Claim 1, **characterized in that** at least one measurement coil (2) is arranged in the region of the hydraulic valve, and **in that** the measurement signal of the measurement coil is used to adjust the drive current.

**3.** Method according to Claim 2, **characterized in that** the measurement signal of the measurement coil (2) is a voltage which is integrated.

**4.** Method according to Claim 3, **characterized in that** the magnetic flux is determined from the integrated voltage, and the magnetic force and/or the tappet stroke is determined from the said magnetic flux.

**5.** Method according to at least one of Claims 2 to 4, **characterized in that** the valve opening current is corrected by a correction term which also takes into account the current-dependent influence of the ferromagnetic circuit.

**6.** Method according to at least one of Claims 2 to 5, **characterized in that** the valve holding current is first calculated, and the valve opening current is ascertained from the said valve holding current by means of a further correction term or an offset.

**7.** Method according to at least one of Claims 2 to 6, **characterized in that** the hydraulic valve is driven by means of a pulse-with-modulated current (PWM), wherein the coil resistance is determined by means of the duty cycle of the PWM driving, and **in that** the coil resistance is also taken into account when calculating the actuating device-specific parameters $KG_{ind}$.

**Revendications**

**1.** Appareil de commande hydraulique de frein présentant au moins une soupape hydraulique commandée par voie électromagnétique et comprenant une bobine électromagnétique (6) et un poussoir (8) déplacé par l'intermédiaire d'un induit (7), l'induit étant guidé axialement dans un boîtier (13) de soupape et étant déplacé sous l'action du courant pour ouvrir et/ou fermer la soupape hydraulique,
**caractérisé en ce que**
la soupape hydraulique est dotée d'un ou plusieurs éléments supplémentaires de mesure (2) qui déterminent le flux magnétique, les lignes de champ magnétique traversant une culasse (14) et pénétrant dans le boîtier (13) lorsque la bobine (6) est alimentée en courant, l'emplacement de transition entre la culasse (14) et le boîtier (13) formant la résistance magnétique $RM^{Lk2}$, les lignes de champ se poursuivant pour traverser un entrefer (15) situé entre l'induit (7) et le boîtier (13), la résistance magnétique en cet emplacement étant désignée par $RM^A$, un autre entrefer étant établi entre l'induit (7) et la culasse (14), auquel entrefer est associée la résistance magnétique $RM^{LR1}$ la résistance magnétique du circuit magnétique étant ainsi définie essentiellement par la somme $RM_{ges} = RM^{LR2} + RM^A + RM^{LR1}$, l'élément de mesure étant une bobine de mesure (2) disposée au niveau de la culasse (14).

2. Procédé de régulation de la position d'ouverture et/ou de passage d'une soupape hydraulique à commande électrique dans un appareil de commande hydraulique de frein selon la revendication 1, **caractérisé en ce qu'**au moins une bobine de mesure (2) est disposée au niveau de la soupape hydraulique et **en ce que** le signal de mesure de la bobine de mesure est utilisé pour réguler le courant de commande.

3. Procédé selon la revendication 2, **caractérisé en ce que** le signal de mesure de la bobine de mesure (2) est une tension intégrée.

4. Procédé selon la revendication 3, **caractérisé en ce que** le flux magnétique et donc la force magnétique et/ou la course du poussoir sont déterminés à partir de la tension intégrée.

5. Procédé selon au moins l'une des revendications 2 à 4, **caractérisé en ce que** le courant d'ouverture de la soupape est corrigé par un terme de correction qui tient compte de l'influence du courant sur le circuit magnétique ferromagnétique.

6. Procédé selon au moins l'une des revendications 2 à 5, **caractérisé en ce que** le courant de maintien de soupape est en outre calculé et **en ce qu'**à partir de là, le courant d'ouverture de la soupape est déterminé au moyen d'un autre terme de correction ou d'un décalage.

7. Procédé selon au moins l'une des revendications 2 à 6, **caractérisé en ce que** la soupape hydraulique est commandée au moyen d'un courant (PWM) en impulsions modulées en largeur, la résistance de la bobine étant déterminée sur le cycle de travail de la commande PWM et **en ce que** la résistance de la bobine est prise en compte lors du calcul des paramètres $KG_{ind}$ de l'appareil de commande particulier.

**Fig. 1**

Fig. 2

$R_M^{LR1}$

$R_M^A$

$R_M^{LR2}$

**Fig. 3**

SO - AD-Ventil

Fig. 4

$$W_L = 1/2 \cdot L \cdot I_0^2 \quad \text{und} \quad \left( W_R = \int_{t_1}^{t_2} I^2 \cdot R \; dt \right) \longrightarrow L \frac{2 \cdot W_R}{I_0^2} \quad \text{bzw.} \quad R_{m_{ges}} = \frac{N^2}{L}$$

**Fig. 5**

EP 1 876 078 B1

$$W_L = W_R = \sum_i^n I_i^2 \cdot R \cdot \Delta t$$

**Fig. 6**

EP 1 876 078 B1

Fig. 7

a) $\frac{L}{R} < x$

b) $\frac{L}{R} > x$

Fig. 8

A Anker

A Abdicht

Δp

KG_all

Var

Input

KG_ind

Output

f(Δp)

82

F Feder

RM = f(I)

81

A Anker = Ankerfläche

A Abdicht = Abdichtfläche

F Feder = Federkraft

I = Ventilstrom

RM = Magnetischer Widerstand

Δp = Differenzdruck

EP 1 876 078 B1

Fig. 9

## Fig. 10

a)

b)

## Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19529433 A1
- EP 0813481 B1
- WO 0198124 A1
- DE 10321783
- WO 03074338 A1
- DE 102004017239